# EUROPEAN PATENT APPLICATION

(11) **EP 4 598 147 A1**
(43) Date of publication of application: **06.08.2025**
(21) Application number: 23890439.5
(22) Date of filing: 09.10.2023
(51) Int. Cl.: H04W 52/02, H04W 88/08

(54) **POWER SUPPLY ENERGY-SAVING CONTROL METHOD, APPARATUS AND SYSTEM FOR COMMUNICATION DEVICE**

(30) Priority: 15.11.2022 CN 202211438242
(71) Applicant: ZTE CORPORATION, Shenzhen, Guangdong 518057 (CN)
(72) Inventor: MENG, Yanni, Shenzhen, Guangdong 518057 (CN); DU, Yonghong, Shenzhen, Guangdong 518057 (CN); ZHANG, Bin, Shenzhen, Guangdong 518057 (CN); WANG, Linguo, Shenzhen, Guangdong 518057 (CN); GAO, Xiaoguang, Shenzhen, Guangdong 518057 (CN)
(74) Representative: Carangelo, Pierluigi
(86) International application number: PCT/CN2023/123634
(87) International publication number: WO 2024/104002

(57) **Abstract**

The embodiments of the present disclosure provide a power supply energy-saving control method, apparatus and system for a communication device. The method includes: determining whether to control a power supply unit for supplying power to a communication device to enter a deep sleep mode; if the power supply unit is required to be control to enter the deep sleep mode, controlling the power supply unit to enter the deep sleep mode; when an accumulated duration reaches a preset trial recovery duration, controlling the power supply unit to perform trial recovery to a normal power supply mode; and controlling, according to a service state of the communication device, the power supply unit to maintain the normal power supply mode or return to the deep sleep mode.

## Description

### Cross-Reference to Related Application

The present disclosure is based on Chinese patent application CN 202211438242. X, filed on 15 November 2022 and entitled "Power supply energy-saving control method, apparatus and system for communication device", and claims the priority of the patent application, the disclosure of which is incorporated herein by reference in its entirety.

### Technical Field

Examples of the present disclosure relate to the field of wireless communication base stations, and in particular, to a power supply energy saving control method, apparatus and system for a communication device.

### Background

How to save power of a power supply is widely studied. With respect to a communication device with an independent power supply, when the communication device is in a long-term idle state, the communication device cannot control to turn off its own power supply, and if the communication device is turned off, the power supply will lose contact with the communication device and cannot be restored. Therefore, if the input switch on the power supply side of the communication device needs to be turned off, the overall power-off effect is achieved by turning off the input switch on the power supply side of the communication device; however, after the input switch is turned off, if the input switch wants to be turned on, a field operation is needed, and the requirement that the communication device has a load at any time and needs to be powered on in time cannot be met. Even if an intelligent input is used, a remote control channel and third party control need to be added, which greatly increases the design cost and increases the control complexity. Since the third party indirectly judges the service state, there is also a defect in real-time power supply.

Aiming at the problem in the related art of how to minimize the overall power consumption without adding additional hardware resources, but also satisfy the reliable power supply requirement for the communication device to work at any time, no solution has been proposed.

### Summary

Embodiments of the present disclosure provide a power supply energy-saving control method, apparatus and system for a communication device, so as to at least solve the problem in the related art that the overall power consumption is minimum without adding additional hardware resources, but the reliable power supply requirement for the communication device to work at any time can be met.

According to one embodiment of the present disclosure, a power supply energy-saving control method for a communication device is provided, which is applied to a control unit. The method includes: determining whether to control a power supply unit for supplying power to a communication device to enter a deep sleep mode; in a case where a determination result is to control the power supply unit to enter the deep sleep mode, controlling the power supply unit to enter the deep sleep mode; in a case where an accumulated duration of the power supply unit being in the deep sleep mode reaches a preset trial recovery duration, controlling the power supply unit to perform trial recovery to a normal power supply mode; and controlling, according to a service state of the communication device, the power supply unit to maintain the normal power supply mode or return to the deep sleep mode.

According to another embodiment of the present disclosure, a power supply energy-saving control apparatus for a communication device is further provided, which is applied to a control unit. The device includes: a determination module, configured to determine whether to control a power supply unit for supplying power to a communication device to enter a deep sleep mode; a first control module, configured to control the power supply unit to enter the deep sleep mode in a case where a determination result is to control the power supply unit to enter the deep sleep mode; a second control module, configured to control the power supply unit to perform trial recovery to a normal power supply mode in a case where an accumulated duration of the power supply unit being in the deep sleep mode reaches a preset trial recovery duration; and a third control module, configured to control the power supply unit to maintain the normal power supply mode or return to the deep sleep mode according to a service state of the communication device.

According to another embodiment of the present disclosure, a power supply energy-saving control system for a communication device is further provided. The system includes: a control unit and a power supply unit for supplying power to a communication device, wherein the control unit is configured to implement any one of the above methods; the power supply unit is configured to enter a deep sleep mode under the control of the control unit.

According to another embodiment of the present disclosure, a computer readable storage medium is further provided. The storage medium stores a computer program, and when being run by a processor, the computer program executes the steps in any one of the above method embodiments.

According to another embodiment of the present disclosure, an electronic device is further provided, including a memory and a processor, wherein the memory stores a computer program, and the processor is configured to run the computer program so as to execute the steps in any one of the above method embodiments.

### Brief Description of the Drawings

Figure 1 is a flowchart of a power supply energy-saving control method for a communication device according to an embodiment of the present disclosure;
Figure 2 is a flowchart of a power supply energy-saving control method for a communication device according to an optional embodiment of the present disclosure;
Figure 3 is a block diagram of a power supply energy-saving control apparatus for a communication device according to an embodiment of the present disclosure;
Figure 4 is a block diagram of a power supply energy-saving control system for a communication device according to an embodiment of the present disclosure;
Figure 5 is a block diagram of a power supply energy-saving control system for a communication device according to an optional embodiment of the present disclosure;
Figure 6 is a block diagram of a power supply energy-saving control system for single power supply communication device according to present embodiment;
Figure 7 is a first block diagram of a radio frequency base station system according to present embodiment;
Figure 8 is a second block diagram of the radio frequency base station system according to present embodiment;
Figure 9 is a third block diagram of the radio frequency base station system according to present embodiment;
Figure 10 is a fourth block diagram of the radio frequency base station system according to present embodiment.

### Detailed Description of the Embodiments

Embodiments of the present disclosure will be described below in detail with reference to the accompanying drawings and in conjunction with embodiments.

It should be noted that, terms such as "first" and "second" in the description, claims, and accompanying drawings of the present disclosure are used to distinguish similar objects, but are not necessarily used to describe a specific sequence or order.

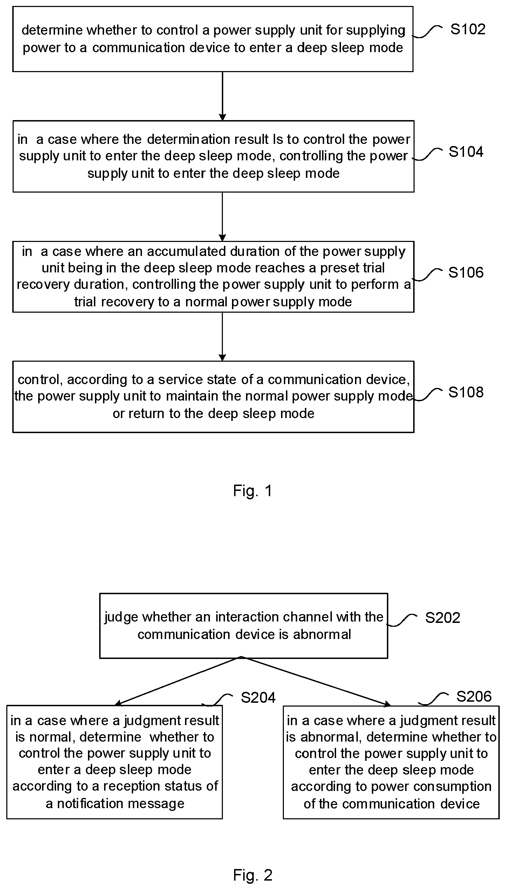

The present embodiment provides a power supply energy-saving control method for a communication device. Figure 1 is a flowchart of a power supply energy-saving control method for a communication device according to an embodiment of the present disclosure, and as shown in figure 1, the method is applied to a control unit. The flow includes the following steps:
Step S102, determining whether to control a power supply unit for supplying power to a communication device to enter a deep sleep mode;
Step S104, in a case where a determination result is to control the power supply unit to enter the deep sleep mode, controlling the power supply unit to enter the deep sleep mode;
Step S106, in a case where an accumulated duration of the power supply unit being in the deep sleep mode reaches a preset trial recovery duration, controlling the power supply unit to perform trial recovery to a normal power supply mode;
Step S108, controlling, according to a service state of the communication device, the power supply unit to maintain the normal power supply mode or return to the deep sleep mode.

By means of the steps S102 to S108, the problems in the related art of how to minimize the overall power consumption without adding additional hardware resources, but also being able to satisfy the reliable power supply requirement for a communication device to work at any time can be solved. If it is determined that the power supply unit needs to enter a deep sleep mode, control the power supply unit to enter the deep sleep mode without adding additional hardware resources, thereby minimizing the overall power consumption; by performing a trial recovery to the normal power supply mode when the trial recovery duration is reached, the reliable power supply requirement for the communication device to work at any time can be satisfied.

In one embodiment, the foregoing step S108 may specifically include: when the communication device is in a active service state, controlling the power supply unit to maintain a normal power supply mode; when the communication device is in an inactive service state, control the power supply unit to return to the deep sleep mode.

Figure 2 is a flowchart of a power supply energy-saving control method for a communication device according to an optional embodiment of the present disclosure. As shown in figure 2, the foregoing step S102 may specifically include:
S202, judging whether an interaction channel with the communication device is abnormal;
S204, in a case where a judgment result is normal, determining whether to control the power supply unit to enter the deep sleep mode according to a reception status of a notification message, specifically, it is determined whether the notification message sent by the communication device in no service state is received, if the notification message is received, it is determined that the power supply unit is controlled to enter the deep sleep mode, that is, the foregoing determination result is to control the power supply unit to enter the deep sleep mode, if the notification message is not received, it is determined that the power supply control unit does not need to enter the deep sleep mode, that is, the foregoing determination result is not to control the power supply unit to enter the deep sleep mode, the notification message is used for instructing a control power supply unit to enter a deep dormant mode, and the notification message carries a preset operating duration, the preset operating duration is longer than the trial recovery duration; in another optional embodiment, in a case where the notification message is not received, it may be further determined, according to power consumption of the communication device, whether to control the power supply unit to enter the deep sleep mode.
S206, in a case where the judgment result is abnormal, determining whether to control the power supply unit to enter the deep sleep mode according to power consumption of the communication device, and further, assessing whether the power consumption of the communication device is less than a preset deep sleep power consumption threshold value; when an assessment result is affirmative, determining that the determination result is to control the power supply unit to enter a deep sleep mode; in the case where an assessment result is negative, determining that the determination result is not to control the power supply unit to enter a deep sleep mode.

Further, the power consumption of the communication device may be determined in the following manners: receiving the power consumption of the communication device sent by a detection unit; or acquiring power conversion control parameters of the power supply unit, determining a load condition of the power supply unit according to the power conversion control parameters, and determining power consumption of the communication device according to the load condition.

In one embodiment, after the foregoing step S108, the method further includes: in a case where the power supply unit is in the deep sleep mode, if the accumulated duration for the power supply unit to being in the deep sleep mode reaches the preset operating duration, controlling the power supply unit to restore to the normal power supply mode, thereby implementing timing power supply restoration.

In one embodiment, before the step S102, the method further includes: acquiring at least one of the following parameters of the power supply unit: voltage, temperature and humidity from a detection unit; determining at least one of the following conditions: a voltage of the power supply unit is less than a preset voltage threshold value, a temperature of the power supply unit is within a preset temperature range, and humidity of the power supply unit is within a preset humidity range. Namely, on the premise that one of the indications of voltage, temperature and humidity satisfies a pre-determined condition, it is judged whether to control a power supply unit to enter a deep sleep mode

In another embodiment, before the step S102, the method further includes: acquiring a current time; determining that the current time is within a preset time interval, that is, it is determined whether to control the power supply unit to enter the deep sleep mode only when the current time is within the preset time interval.

In optional embodiments, in some special cases, such as when the temperature drops below the preset temperature range or the humidity increases beyond the preset humidity range, the power supply unit can be forcibly controlled to supply power to the communication devices. Specifically, after the foregoing step S204, the method further includes: controlling the power supply unit to restore to the normal power supply mode in a case where at least one of the following conditions is satisfied: voltage of the power supply unit is greater than or equal to a preset voltage threshold, temperature of the power supply unit is not within a preset temperature range, and humidity of the power supply unit is not within a preset humidity range.

In this embodiment, when a communication device is in an inactive service state, main control power supply and service power supply of the communication device can be completely cut off, and only a minimum system heartbeat of an auxiliary unit is maintained but a timing automatic recovery manner is available, thereby achieving minimum power consumption effect where the communication device is powered off and not working and the power supply is also not working. The specific steps are as follows: a main controller of a communication device notifies, according to a service pre-judgement of the communication device, an auxiliary unit to control a power supply unit to enter a deep sleep mode; and at the same time, the main controller also notifies the auxiliary unit of the need to control the operating duration T0 of the power supply unit in the mode. After the auxiliary unit controls the power supply unit to enter the mode, the main control power supply and service power supply of the communication device are directly turned off, meanwhile, the power consumption of the power supply unit and the auxiliary unit also needs to be controlled to be reduced to the minimum, i.e., only the heartbeat of the monitoring part of the auxiliary unit is kept, the method is used for counting the operation timing of a deep sleep mode, so that after reaching a main control setting duration T0, an auxiliary unit controls a power supply unit to automatically exit the deep sleep mode, the auxiliary unit resumes normal operation, and controls the power supply unit to resume the normal power supply mode. The auxiliary unit starts a short time interval period T2 (T2 < T0) for trial recovery, that is, exiting the deep sleep mode and recovering same to the normal power supply mode. If the communication device has a service which can be borne directly after power supply is recovered, and if there is no service, it can return to the deep sleep mode again, through a flexible deep sleep mode, the problem that a quick recovery cannot be achieved when a service needs to be borne is solved.

If the interaction channel is abnormal, and the communication device cannot notify the auxiliary unit of controlling the power supply unit to enter the deep sleep mode, the auxiliary unit can start the autonomous determination, including:
According to a system deep sleep power consumption threshold P pre-configured by a communication device, an auxiliary unit determines, according to information provided by a detection unit, whether the power consumption of the current communication device is lower than the deep sleep power consumption threshold P, and the duration of a current state exceeds T1 preset time; if no detection unit provides power consumption information, a current load status of the power supply unit is determined according to a power conversion control parameter of the power supply unit itself, such as a duty ratio.

The auxiliary unit controls the power supply to enter the deep sleep mode by itself.

In addition, considering the reliability problem of a power supply unit device, risks caused by temperature tracking, condensation, etc. need to be considered; an auxiliary unit monitors operation parameters and environment parameters provided by a detection unit, such as power consumption, voltage, temperature, humidity, etc.; the auxiliary unit has a default value of an alarm threshold value corresponding to each parameter; and a main controller can perform threshold value configuration via an information interaction channel. If the auxiliary unit determines that any one of the operating parameters and the environmental parameters exceeds the alarm threshold, not accepting the notification of the deep sleep mode or not performing an autonomous determination of the deep sleep mode; at the same time, in the deep sleep mode, if any parameter exceeds the threshold, then forcibly exiting.

On the premise of ensuring the reliability of power supply of a communication device, performing power supply fine energy conservation and power consumption reduction control, so as to realize the overall power consumption reduction of the communication device. In this embodiment, a method for interacting management with a system is used to maximize an energy-saving effect, and power supply control is performed by using an existing power management resource, without increasing a power supply area and costs.

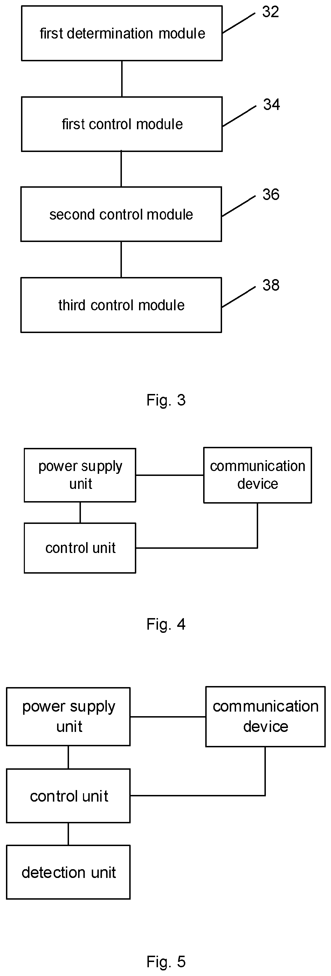

The present embodiments of the present disclosure further provide an energy-saving control device for power supply of a communication device. Figure 3 is a block diagram of a power supply energy-saving control apparatus for a communication device according to an embodiment of the present disclosure, and as shown in figure 3, the device is applied to a control unit. The device includes:
A first determination module 32, configured to determine whether to control a power supply unit for supplying power to a communication device to enter a deep sleep mode;
A first control module 34, configured to control the power supply unit to enter the deep sleep mode in a case where a determination result is to control the power supply unit to enter the deep sleep mode;
A second control module 36, configured to control the power supply unit to perform trial recovery to a normal power supply mode in a case where an accumulated duration of the power supply unit being in the deep sleep mode reaches a preset trial recovery duration;
A third control module 38, configured to control the power supply unit to maintain the normal power supply mode or return to the deep sleep mode according to a service state of the communication device,.
In one embodiment, the third control module 38 is further configured to, when the communication device is in a active service state, control the power supply unit to maintain the normal power supply mode; and when the communication device is in an inactive service state, control the power supply unit to return to the deep sleep mode.

In one embodiment, the first determination module 32 includes:
A judgment sub-module, configured to judge whether an interactive channel with the communication device is abnormal;
A first determination sub-module, configured to, in the case where a judgement result is normal, determine, according to a reception status of a notification message, whether to control the power supply unit to enter a deep sleep mode, wherein the notification message is used for instructing the power supply unit to enter the deep sleep mode, and the notification message carries a preset operating duration, wherein the preset operating duration is greater than the trial recovery duration;
A second determining sub-module, configured to, in the case where a judgement result is abnormal, determine, according to power consumption of the communication device, whether to control the power supply unit to enter the deep sleep mode.

In one embodiment, the first determination sub-module is further configured to determine whether the notification message sent by the communication device in an inactive service state is received; if the notification message is received, determining that the determination result is to control the power supply unit to enter the deep sleep mode.

In one embodiment, the apparatus further includes:
A receiving module, configured to receive the power consumption of the communication device sent by a detection unit; or
A second determination module, configured to acquire power conversion control parameters of the power supply unit, determine a load condition of the power supply unit according to the power conversion control parameters, and determine power consumption of the communication device according to the load condition.

In one embodiment, the second determining submodule is further configured to assess whether the power consumption of the communication device is less than a preset deep sleep power consumption threshold; when an assessment result is affirmative, determining that the determination result is to control the power supply unit to enter the deep sleep mode.

In one embodiment, the apparatus further includes:
A fourth control module, configured to, in the case where the power supply unit is in the deep sleep mode, if an accumulated duration for the power supply unit to enter the deep sleep mode reaches the preset operating duration, control the power supply unit to restore to the normal power supply mode.

In one embodiment, the apparatus further includes:
A first acquisition module, configured to acquire at least one of the following parameters of the power supply unit from a detection unit: voltage, temperature and humidity;
A third determination module, configured to determine at least one of the following conditions: the voltage of the power supply unit is less than a preset voltage threshold, the temperature of the power supply unit is within a preset temperature range, and the humidity of the power supply unit is within a preset humidity range.

In one embodiment, the apparatus further includes:
A second acquisition module, configured to acquire a current time;
A fourth determination module, configured to determine that the current time is within a preset time interval.

In one embodimentc, the apparatus further includes:
A fifth control module, configured to control the power supply unit to restore to the normal power supply mode in a case where at least one of the following conditions is satisfied: voltage of the power supply unit is greater than or equal to the preset voltage threshold, temperature of the power supply unit is not within a preset temperature range, and the humidity of the power supply unit is not within a preset humidity range.

The embodiments of the present disclosure further provide a power supply energy-saving control system for a communication device. Figure 4 is a block diagram of a power supply energy-saving control system for a communication device according to an embodiment of the present disclosure. As shown in figure 4, the system includes: a control unit and a power supply unit for supplying power to the communication device, wherein,

The control unit is configured to implement the method as claimed in any one of the described claims;

The power supply unit is configured to enter a deep sleep mode under the control of the control unit.

Figure 5 is a block diagram of a power supply energy-saving control system for a communication device according to an optional embodiment of the present disclosure. As shown in figure 5, the system further includes: a detection unit, wherein the detection unit is used for detecting power consumption of the communication device and/or detecting at least one of the following parameters of the power supply unit: voltage, temperature and humidity; and the detection unit is also used for sending the power consumption of the communication device and/or at least one of the following parameters of the power supply unit: the voltage, the temperature and the humidity to the control unit.

The control unit may also be an auxiliary unit or another unit capable of implementing a similar function. The following describes this embodiment by using an example in which the control unit is an auxiliary unit.

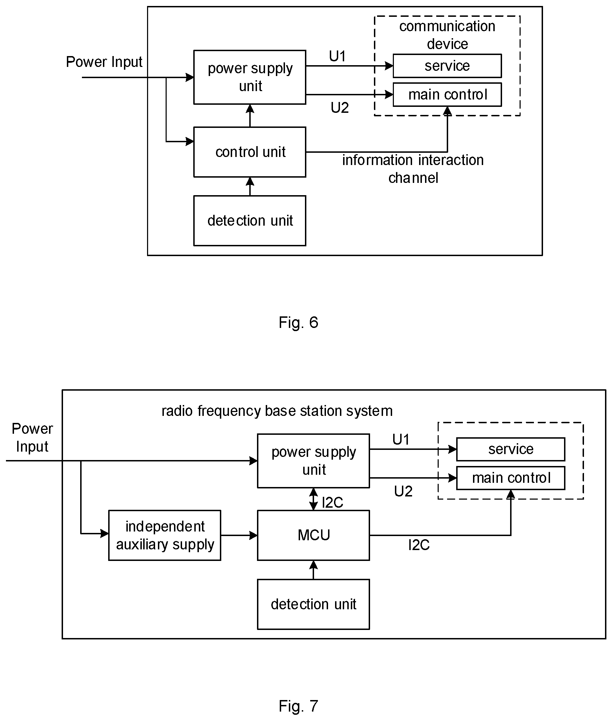

Figure 6 is a block diagram of a power supply energy-saving control system for single power supply communication device according to present embodiment. As shown in figure 6, the system includes a power supply unit, an auxiliary unit, a detection unit, and a communication device (including service and control functions). When the communication device enters deep sleep, the service is turned off, and main control unit enters a low power consumption mode. The auxiliary unit performs active recognition based on the main control notification and the information provided by the detection unit, and performs deep sleep management on the power supply unit, thereby achieving the lowest power consumption of the whole machine.

In a radio frequency base station system, the control unit or the auxiliary unit may specifically be an MCU.

In a radio frequency base station system, if the system power amplifier has no traffic, it enters deep sleep. The digital part serves as a main controller to notify the auxiliary unit to control the power supply unit to enter deep sleep, and in the case where the main controller does not notify the auxiliary unit, the auxiliary unit can autonomously determine whether to control the power supply unit to enter deep sleep, based on judgment conditions that include, but are not limited to, a current system input power, a system preset deep sleep threshold and a duration of the status. Figure 7 is a first block diagram of a radio frequency base station system according to present embodiment, and as shown in figure 7, the radio frequency power amplifier and the digital unit are communication devices (including service and main control). The power supply unit provides the U1 power amplifier supply and the U2 digital supply. The MCU is an auxiliary unit, which is supplied with power by an independent auxiliary power supply; The interaction channel between the MCU and the main controller (i.e., the digital part) is I²C communication, and it controls the power supply unit through I²C communication. The detection unit provides information detection, such as temperature, humidity, and output. When performing deep sleep mode management on the power supply unit, notify the power supply unit to shut down the outputs of U1 and U2 through the I²C communication channel between the MCU and the power supply unit.

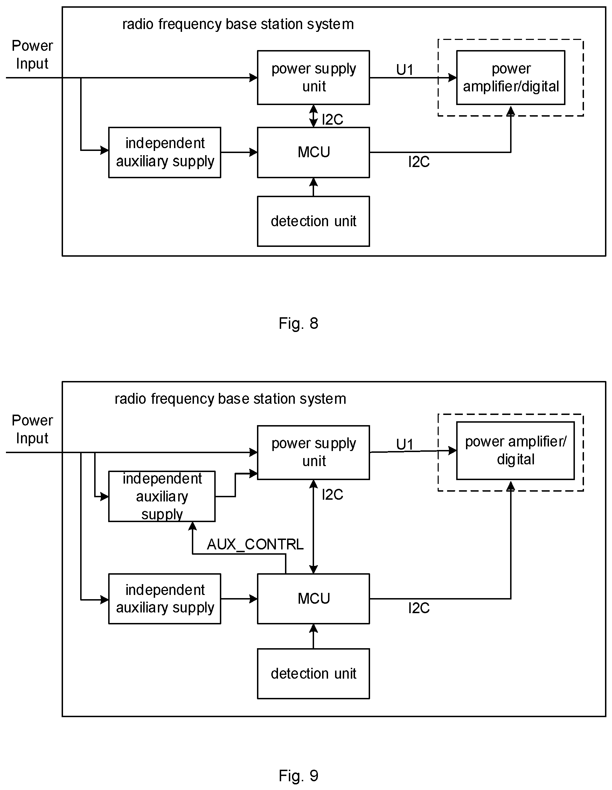

If there is no detection unit to provide input power data, the power supply unit may determine a current load condition of the power supply unit according to control parameters of the power conversion unit, and autonomously determine, according to the parameters as a determining basis, whether to enter a deep sleep mode of the power supply unit. Figure 8 is a second block diagram of the radio frequency base station system according to present embodiment, and as shown in figure 8, in the radio frequency base station system, the radio frequency power amplifier and the digital unit are communication devices (including service and main control). The power supply unit provides U1 power supply, which is for the power amplifier and digital unit. When performing deep sleep mode management on the power supply unit, the power supply unit is notified to shut down the U1 output through the I²C communication channel between the MCU and the power supply unit.

Figure 9 is a third block diagram of the radio frequency base station system according to present embodiment, and as shown in figure 9, in the radio frequency base station system, the radio frequency power amplifier and the digital unit are communication devices (including service and main control). The power supply unit provides U1 power supply, the MCU is an auxiliary unit, an independent auxiliary power supply supplies power to the auxiliary unit. The interaction channel between the MCU and the control unit (i.e., the digital unit) is I²C communication. The MCU controls, via AUX_CONTROL, the auxiliary power supply of the power supply unit to supply power. When deep sleep mode management is performed on a power supply unit, power supply of an auxiliary source of the power supply unit may be directly turned off through AUX_CONTROL control signal, resulting in the entire power supply unit being inactive and having zero power consumption. The auxiliary unit can obtain current operating environment's temperature and humidity through the detection unit, and if the temperature difference exceeds a threshold or the humidity exceeds a threshold, these conditions serve as constraints to prohibit the power supply unit from entering the deep sleep mode or to forcibly exit the upgrade mode.

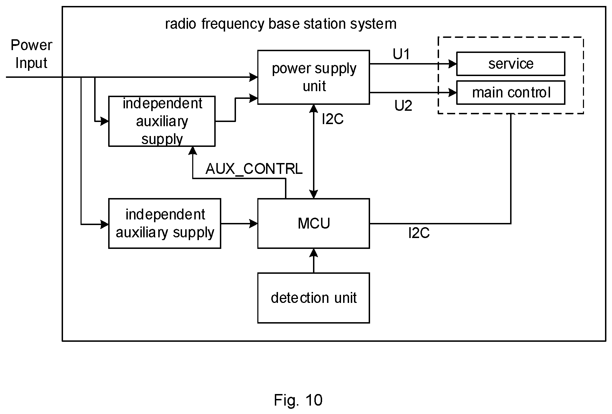

Figure 10 is a fourth block diagram of the radio frequency base station system according to present embodiment, and as shown in figure 10, in the radio frequency base station system, the radio frequency power amplifier and the digital unit are communication devices (including service and main control). A power supply unit provides U1 power amplifier power supply and U2 digital power supply; an MCU is an auxiliary unit; an independent auxiliary power supply supplies power thereto; an interaction channel with a main control (i.e. the digital unit) is I²C communication; and the MCU controls, via an AUX_CONTROL, the auxiliary power supply of the power supply unit to supply power. When deep sleep mode management is performed on a power supply unit, power supply of an auxiliary source of the power supply unit may be directly turned off through an AUX_CONTROL control signal, resulting in the entire power supply unit being inactive and having zero power consumption. When the auxiliary unit autonomously determines whether to control the power supply unit to enter the deep sleep mode, it can add a time period judgment. For example, if the preset time is in the early morning, the auxiliary unit will only autonomously enter the deep sleep mode during the early morning time period.

Embodiments of the present disclosure also provide a computer readable storage medium. The computer readable storage medium stores a computer program, wherein the computer program is configured to execute the steps in any one of the method embodiments during running.

In an exemplary embodiment, the computer readable storage medium may include, but is not limited to, any medium that can store a computer program, such as a USB flash drive, a Read-Only Memory, ROM, a Random Access Memory, RAM, a removable hard disk, a magnetic disk, or an optical disc.

Embodiments of the present disclosure further provide an electronic device, including a memory and a processor. The memory stores a computer program. The processor is configured to execute the computer program to implement steps in any one of the method embodiments.

In an exemplary embodiment, the electronic device further includes a transmission device and an input/output device, wherein the transmission device is connected to the processor, and the input/output device is connected to the processor.

For specific examples in this embodiment, reference may be made to the examples described in the foregoing embodiments and exemplary embodiments, and details are not repeatedly described in this embodiment.

Obviously, those skilled in the art should understand that each module or each step of the present disclosure can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus, furthermore, in some cases, the shown or described steps may be executed in an order different from that described here, or they are made into integrated circuit modules respectively, or a plurality of modules or steps therein are made into a single integrated circuit module for implementation. As such, the present disclosure is not limited to any particular hardware and software combination.

The foregoing descriptions are merely exemplary embodiments of the present disclosure, but are not intended to limit the present disclosure. For those skilled in the art, the present disclosure may have various modifications and variations. Any modifications, equivalent replacements, improvements and the like made within the principle of the present disclosure shall fall within the scope of protection of the present disclosure.

## Claims

1. A power supply energy-saving control method for a communication device, applied to a control unit, the method comprising:
determining whether to control a power supply unit for supplying power to a communication device to enter a deep sleep mode;
in a case where a determination result is to control the power supply unit to enter the deep sleep mode, controlling the power supply unit to enter the deep sleep mode;
in a case where an accumulated duration of the power supply unit being in the deep sleep mode reaches a preset trial recovery duration, controlling the power supply unit to perform trial recovery to a normal power supply mode; and
controlling, according to a service state of the communication device, the power supply unit to maintain the normal power supply mode or return to the deep sleep mode.

2. The method according to claim 1, wherein controlling, according to the service state of the communication device, the power supply unit to maintain the normal power supply mode or return to the deep sleep mode comprises:
in a case where the communication device is in a active service state, control the power supply unit to maintain the normal power supply mode; and
in a case where the communication device is in an inactive service state, control the power supply unit to return to the deep sleep mode.

3. The method according to claim 1, wherein determining whether to control the power supply unit for supplying power to the communication device to enter the deep sleep mode comprises:
judging whether an interaction channel with the communication device is abnormal;
in a case where a judgment result is normal, determining whether to control the power supply unit to enter the deep sleep mode according to a reception status of a notification message, wherein the notification message is used to indicate controlling the power supply unit to enter the deep sleep mode, and the notification message carries a preset operating duration, wherein the preset operating duration is longer than the trial recovery duration; and
in a case where the judgment result is abnormal, determining whether to control the power supply unit to enter the deep sleep mode according to power consumption of the communication device.

4. The method according to claim 3, wherein determining whether to control the power supply unit to enter the deep sleep mode according to the reception status of the notification message comprises:
determining whether the notification message sent by the communication device in an inactive service state is received;
in a case where the notification message is received, determining that the determination result is to control the power supply unit to enter the deep sleep mode.

5. The method according to claim 3, wherein before determining whether to control the power supply unit to enter the deep sleep mode according to power consumption of the communication device, the method further comprises:
receiving the power consumption of the communication device sent by a detection unit; or
acquiring power conversion control parameters of the power supply unit, determining a load condition of the power supply unit according to the power conversion control parameters, and determining the power consumption of the communication device according to the load condition.

6. The method according to claim 3, wherein determining whether to control the power supply unit to enter the deep sleep mode according to power consumption of the communication device comprises:
assessing whether the power consumption of the communication device is less than a preset deep sleep power consumption threshold; and
in a case where an assessment result is affirmative, determining that the determination result is to control the power supply unit to enter the deep sleep mode.

7. The method according to claim 3, wherein after controlling, according to the service state of the communication device, the power supply unit to maintain the normal power supply mode or return to the deep sleep mode, the method further comprises:
in a case where the power supply unit is in the deep sleep mode, if the accumulated duration of the power supply unit to being in the deep sleep mode reaches the preset operating duration, controlling the power supply unit to restore to the normal power supply mode.

8. The method according to any one of claims 1 to 7, wherein before determining whether to control the power supply unit for supplying power to the communication device to enter the deep sleep mode, the method further comprises:
acquiring at least one of the following parameters of the power supply unit from a detection unit: voltage, temperature and humidity;
determining at least one of the following conditions: the voltage of the power supply unit is less than a preset voltage threshold, the temperature of the power supply unit is within a preset temperature range, and the humidity of the power supply unit is within a preset humidity range.

9. The method according to any one of claims 1 to 7, wherein before determining whether to control the power supply unit for supplying power to the communication device to enter the deep sleep mode, the method further comprises:
acquiring a current time;
determining that the current time is within a preset time interval.

10. The method according to claim 9, wherein after controlling the power supply unit to enter the deep sleep mode, the method further comprises:
controlling the power supply unit to restore to the normal power supply mode in a case where at least one of the following conditions is satisfied: voltage of the power supply unit is greater than or equal to a preset voltage threshold, temperature of the power supply unit is not within a preset temperature range, and humidity of the power supply unit is not within a preset humidity range.

11. A power supply energy-saving control apparatus for a communication device, applied to a control unit, the device comprising:
a determination module, configured to determine whether to control a power supply unit for supplying power to a communication device to enter a deep sleep mode;
a first control module, configured to control the power supply unit to enter the deep sleep mode in a case where a determination result is to control the power supply unit to enter the deep sleep mode;
a second control module, configured to control the power supply unit to perform trial recovery to a normal power supply mode in a case where an accumulated duration of the power supply unit being in the deep sleep mode reaches a preset trial recovery duration; and
a third control module, configured to control the power supply unit to maintain the normal power supply mode or return to the deep sleep mode according to a service state of the communication device.

12. A power supply energy-saving control system for a communication device, the system comprising: a control unit and a power supply unit for supplying power to a communication device, wherein,
the control unit is configured to implement the method according to any one of claims 1 to 10;
the power supply unit is configured to enter a deep sleep mode under the control of the control unit.

13. The system according to claim 12, further comprising: a detection unit, wherein the detection unit is configured to detect power consumption of the communication device, and/or detect at least one of the following parameters of the power supply unit: voltage, temperature, and humidity; and send the power consumption of the communication device and/or at least one of the following parameters of the power supply unit: voltage, temperature and humidity to the control unit.

14. A computer readable storage medium, storing a computer program, wherein the computer program implements the method according to any one of claims 1 to 10 when being executed by a processor.

15. An electronic device, comprising a memory and a processor, wherein the memory stores a computer program, and the processor is configured to execute the computer program to implement the method according to any one of claims 1 to 10.
